# EUROPÄISCHE PATENTSCHRIFT

(11) **EP 2 665 779 B1**
(45) Veröffentlichungstag und Bekanntmachung des Hinweises auf die Patenterteilung: **03.08.2016**
(21) Anmeldenummer: 12701706.9
(22) Anmeldetag: 19.01.2012
(51) Int. Cl.: C08L 77/00, C08L 77/02, C08L 77/06, C08K 3/02, C08K 5/5399, C08K 7/14, C08K 13/02, C08L 23/08

(54) **FLAMMGESCHÜTZTE THERMOPLASTISCHE FORMMASSE**
FLAME-PROTECTED THERMOPLASTIC MOLDING COMPOUND
MATIÈRE À MOULER THERMOPLASTIQUE IGNIFUGE

(30) Priorität: 20.01.2011 EP 11151495
(43) Veröffentlichungstag der Anmeldung: 27.11.2013
(73) Patentinhaber: BASF SE, 67056 Ludwigshafen am Rhein (DE)
(72) Erfinder: KÖNIG, Alexander, 76646 Bruchsal (DE); XUE, Siqi, Shanghai 200433 (CN); USKE, Klaus, 67098 Bad Dürkheim (DE); ROTH, Michael, 64686 Lautertal (DE)
(74) Vertreter: BASF IP Association
(86) Internationale Anmeldenummer: PCT/EP2012/050780
(87) Internationale Veröffentlichungsnummer: WO 2012/098185

(56) Entgegenhaltungen:
- EP-A1- 1 626 066
- EP-A1- 2 100 919
- WO-A1-2005/121249
- US-A1- 2010 261 818

## Beschreibung

Die Erfindung betrifft eine flammgeschützte thermoplastische Formmasse auf Basis von aliphatischen Polyamiden, Verfahren zu ihrer Herstellung und ihre Verwendung zur Herstellung von Formkörpern, Fasern oder Folien, sowie daraus hergestellte Formkörper, Fasern oder Folien.

Der Einsatz von cyclischen Phenoxyphosphazenen in flammgeschützten Polyamidharz-Zusammensetzungen ist aus dem Stand der Technik bekannt. Die EP-A-2 100 919 betrifft flammgeschützte Polyamidharze, die neben einem Polyamidharz einen Phosphor enthaltenden, flammhemmenden Stoff und Glasfasern enthalten. Die phosphorhaltige Substanz kann ausgewählt sein aus Reaktionsprodukten von Melamin mit Phosphorsäure, aus (Di)phosphinatsalzen sowie Phosphazen-Verbindungen, insbesondere cyclischen Phenoxyphosphazen-Verbindungen.

Die US-A-2010/0261818 betrifft halogenfreie, flammhemmende Polyamid-Zusammensetzungen, die in elektrischen Anwendungen eingesetzt werden können. Die Polyamidharze enthalten ein Phosphinat, ein Phosphazen und wahlweise eine flammhemmende synergistische Verbindung, ausgewählt aus speziellen Oxiden. Als cyclische Phosphazene können beispielsweise Phenoxyphosphazene eingesetzt werden.

EP 1 626 066 A1 betrifft Glühdraht-beständige flammwidrige thermoplastische Polymere und polymere Formmassen, die eine bestimmte Flammschutzmittel-Kombination enthalten. Dazu offenbart EP 1 626 066 A1 Glühdraht-beständige flammwidrige Polymere, die als Komponente A 40 bis 90 Gew.-% Polymer, als Komponente B 0 bis 40 Gew.-% Verstärkungsstoff, als Komponente C 3 bis 15 Gew.-% roten Phosphor, als Komponente D 5 bis 20 Gew.-% Phosphor/Stickstoff-Flammschutzmittel, als Komponente E 0 bis 15 Gew.-% Phenolharz und als Komponente F 0 bis 10 Gew.-% Nanocomposite enthalten, wobei die Summe der Komponenten immer 100 Gew.-% beträgt.

WO 2005/121249 A1 betrifft thermoplastische Formmassen mit verbesserter Fließfähigkeit auf Basis eines thermoplastischen Polyamids und eines Copolymerisates aus mindestens einem Olefin mit mindestens einem Metacrylsäureester oder Acrylsäureester eines aliphatischen Alkohols.

Die flammhemmende Wirkung der vorbekannten flammgeschützten Polyamid-Zusammensetzungen ist noch nicht für alle Anwendungen ausreichend. Insbesondere sind die Brandzeiten teilweise noch zu lang.

Aufgabe der vorliegenden Erfindung ist die Bereitstellung von flammhemmenden, Polyamide enthaltenden, thermoplastischen Formmassen, die gegenüber vorbekannten Formmassen verkürzte Brandzeiten bei guter Brandschutz-Klassifizierung aufweisen.

Die Aufgabe wird erfindungsgemäß gelöst durch eine thermoplastische Formmasse, bestehend aus
a) 30 bis 95 Gew.-% mindestens eines aliphatischen Polyamids oder Copolyamids als Komponente A,
b) 1 bis 30 Gew.-% mindestens eines cyclischen Phenoxyphosphazens mit mindestens 3 Phenoxyphosphazen-Einheiten als Komponente B,
c) 1 bis 15 Gew.-% roten Phosphor als Komponente C,
d) 0,1 bis 20 Gew.-% mindestens eines Schlagzäh-modifizierenden Polymers als Komponente D, wobei Copolymerisate von Ethylen mit Acrylaten, Acrylsäure und/oder Maleinsäureanhydrid eingesetzt werden,
e) 0 bis 50 Gew.-% Glasfasern als Komponente E,
f) 0 bis 30 Gew.-% weitere Zusatzstoffe als Komponente F, wobei die Komponente F ein Stabilisator und/oder Gleit- und Entformungsmittel ist,
wobei die Gesamtmenge der Komponenten A bis F 100 Gew.-% ergibt.

Es wurde erfindungsgemäß gefunden, dass die Kombination von cyclischen Phenoxyphosphazenen mit rotem Phosphor zu kürzeren Brandzeiten bei unveränderter Brandschutz-Klassifizierung führt. Damit kann die flammhemmende Wirkung der Polyamid-Zusammensetzungen durch eine Kombination des roten Phosphors mit cyclischen Phenoxyphosphazenen deutlich verbessert werden.

Die einzelnen Komponenten der thermoplastischen Formmasse werden nachfolgend beschrieben.

### Komponente A

Als Komponente A werden 30 bis 95 Gew.-%, vorzugsweise 45 bis 84,5 Gew.-%, insbesondere 55 bis 69,5 Gew.-% mindestens eines aliphatischen Polyamids oder Copolyamids eingesetzt. Die Mindestmenge kann gemäß einer Ausführungsform der Erfindung 59,5 Gew.-% betragen.

Die erfindungsgemäß eingesetzten Polyamide werden durch Umsetzung von Ausgangsmonomeren hergestellt, die beispielsweise ausgewählt sind aus Dicarbonsäuren und Diaminen oder Salzen aus den Dicarbonsäuren und Diaminen, aus Aminocarbonsäuren, Aminonitrilen, Lactamen und Gemischen davon. Es kann sich dabei um Ausgangsmonomere von beliebigen aliphatischen Polyamiden handeln. Die Polyamide können amorph, kristallin oder teilkristallin sein. Die Polyamide können ferner beliebige geeignete Viskositäten bzw. Molekulargewichte aufweisen. Besonders geeignet sind Polyamide mit aliphatischem, teilkristallinen oder amorphem Aufbau jeglicher Art.

Solche Polyamide weisen im allgemeinen eine Viskositätszahl von 90 bis 350, vorzugsweise 110 bis 240 ml/g auf, bestimmt in einer 0,5 gew.%-igen Lösung in 96 gew.-%-iger Schwefelsäure bei 25°C gemäß ISO 307.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 be-, schrieben werden, sind bevorzugt. Beispiele hierfür sind Polyamide, die sich von Lactamen mit 7 bis 11 Ringgliedern ableiten, wie Polycaprolactam und Polycapryllactam, sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien Adipinsäure, Azelainsäure, Sebacinsäure und Dodecandisäure (= Decandicarbonsäure) als Säuren genannt.

Als Diamine eignen sich besonders Alkandiamine mit 2 bis 12, insbesondere 6 bis 8 Kohlenstoffatomen sowie Di- (4-aminocyclohexyl)-methan oder 2,2-Di-(4-aminocyclohexyl)-propan.

Bevorzugte Polyamide sind Polyhexamethylenadipinsäureamid (PA 66) und Polyhexamethylensebacinsäureamid (PA 610), Polycaprolactam (PA 6) sowie Copolyamide 6/66, insbesondere mit einem Anteil von 5 bis 95 Gew.-% an Caprolactam-Einheiten. PA 6, PA 66 und Copolyamide 6/66 sind besonders bevorzugt.

Außerdem seien auch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

Weitere Beispiele sind Polyamide, die durch Copolymerisation zweier oder mehrerer der vorgenannten Monomeren erhältlich sind, oder Mischungen mehrerer Polyamide, wobei das Mischungsverhältnis beliebig ist.

Die nachfolgende, nicht abschließende Aufstellung enthält die genannten, sowie weitere Polyamide im Sinne der Erfindung (in Klammern sind die Monomeren angegeben):
PA 26 (Ethylendiamin, Adipinsäure)
PA 210 (Ethylendiamin, Sebacinsäure)
PA 46 (Tetramethylendiamin, Adipinsäure)
PA 66 (Hexamethylendiamin, Adipinsäure)
PA 69 (Hexamethylendiamin,Azelainsäure)
PA 610 (Hexamethylendiamin, Sebacinsäure)
PA 612 (Hexamethylendiamin, Decandicarbonsäure)
PA 613 (Hexamethylendiamin, Undecandicarbonsäure)
PA 1212 (1,12-Dodecandiamin, Decandicarbonsäure)
PA 1313 (1,13-Diaminotridecan, Undecandicarbonsäure)
PA 4 (Pyrrolidon)
PA 6 (ε-Caprolactam)
PA 7 (Ethanolactam)
PA 8 (Capryllactam)
PA 9 (9-Aminononansäure)
PA11 (11-Aminoundecansäure)
PA12 (Laurinlactam)

Diese Polyamide und ihre Herstellung sind bekannt. Einzelheiten zu ihrer Herstellung findet der Fachmann in Ullmanns Enzyklopädie der Technischen Chemie, 4. Auflage, Bd. 19, S. 39-54, Verlag Chemie, Weinmann 1980, sowie Ullmanns Encyclopedia of Industrial Chemistry, Vol. A21, S. 179-206, VCH Verlag, Weinheim 1992, sowie Stoeckhert, Kunststofflexikon, S. 425-428, Hanser Verlag München 1992 (Stichwort "Polyamide" und folgende).

Besonders bevorzugt werden Polyamid-6 oder Polyamid-66 eingesetzt.

Zudem ist es erfindungsgemäß möglich, funktionalisierende Verbindungen in den Polyamiden vorzusehen, die zur Anbindung an Carboxyl- oder Aminogruppen befähigt sind und die z. B. mindestens eine Carboxyl-, Hydroxyl- oder Aminogruppe aufweisen. Dabei handelt es sich vorzugsweise um
verzweigend wirkende Monomere, die z. B. mindestens drei Carboxyl- oder Aminogruppen aufweisen,
Monomere, die zur Anbindung an Carboxyl- oder Aminogruppen befähigt sind, z. B. durch Epoxy-, Hydroxy-, Isocyanato-, Amino- und/oder Carboxylgruppen, und funktionelle Gruppen aufweisen, ausgewählt aus Hydroxyl-, Ether-, Ester-, Amid-, Imin-, Imid-, Halogen-, Cyano- und Nitrogruppen, C-C-Doppel- oder-Dreifachbindungen,
oder um Polymerblöcke, die zur Anbindung an Carboxyl- oder Aminogruppen befähigt sind.

Durch den Einsatz der funktionalisierenden Verbindungen kann das Eigenschaftsspektrum der hergestellten Polyamide in weiten Bereichen frei eingestellt werden.

Beispielsweise können Triacetondiamin-Verbindungen als funktionalisierende Monomere eingesetzt werden. Es handelt sich dabei vorzugsweise um 4-Amino-2,2,6,6-tetramethylpiperidin oder 4-Amino-1-alkyl-2,2,6,6-tetramethylpiperidin, in denen die Alkylgruppe 1 bis 18 C-Atome aufweist oder durch eine Benzylgruppe ersetzt ist. Die Triacetondiamin-Verbindung ist in einer Menge von vorzugsweise 0,03 bis 0,8 mol-%, besonders bevorzugt 0,06 bis 0,4 mol-%, jeweils bezogen auf 1 Mol Säureamid-Gruppen des Polyamids, vorhanden. Für eine weitere Beschreibung kann auf die DE-A-44 13 177 verwiesen werden.

Als weitere funktionalisierende Monomere können auch die üblicherweise als Regler eingesetzten Verbindungen wie Monocarbonsäuren und Dicarbonsäuren verwendet werden. Für eine Beschreibung kann ebenfalls auf die DE-A-44 13 177 verwiesen werden.

### Komponente B

Als Komponente B werden 1 bis 30 Gew.-%, vorzugsweise 1,5 bis 15 Gew.-%, insbesondere 2,5 bis 7,5 Gew.-% mindestens eines cyclischen Phenoxyphosphazens mit mindestens drei Phenoxyphosphazen-Einheiten eingesetzt. Entsprechende Phenoxyphosphazene sind beispielsweise in US 2010/0261818 in den Absätzen [0051] bis [0053] beschrieben. Es kann insbesondere auf die Formel (I) verwiesen werden. Ferner sind entsprechende cyclische Phenoxyphosphazene in EP-A-2 100 919 beschrieben, dort insbesondere in den Absätzen [0034] bis [0038]. Die Herstellung kann erfolgen, wie in EP-A-2 100 919 in Absatz [0041] beschrieben. Gemäß einer Ausführungsform der Erfindung können die Phenylgruppen im cyclischen Phenoxyphosphazen durch C₁₋₄-Alkylreste substituiert sein. Bevorzugt handelt es sich um reine Phenylreste. Für eine weitere Beschreibung der cyclischen Phosphazene kann auf Römpp Chemie-Lexikon, 9. Aufl., Stichwort "Phosphazene" verwiesen werden. Die Herstellung erfolgt beispielsweise über Cyclophosphazen, das aus PCl₅ und NH₄Cl erhältlich ist, wobei die Chlorgruppen im Cyclophosphazen durch Umsetzung mit Phenol durch Phenoxygruppen ersetzt sind.

Die cyclische Phenoxyphosphazen-Verbindung kann beispielsweise hergestellt werden wie in "Phosphorus-Nitrogen Compounds" (Academic Press, 1972), H. R. Allcock und "Inorganic Polymers" (Prentice Hall International, Inc., 1992), J. E. Mark, H. R. Allcock und R. West, beschrieben.

Vorzugsweise ist Komponente B ein Gemisch aus cyclischen Phenoxyphosphazenen mit drei und vier Phenoxyphosphazen-Einheiten. Dabei beträgt das Gewichtsverhältnis von drei Phenoxyphosphazen-Einheiten zu vier Phenoxyphosphazen-Einheiten enthaltenden Ringen vorzugsweise etwa 80:20. Größere Ringe der Phenoxyphosphazen-Einheiten können ebenfalls vorliegen, jedoch in geringen Mengen. Geeignete cyclische Phenoxyphosphazene sind von Fushimi Pharmaceutical Co., Ltd., unter der Bezeichnung Rabitle^{®} FP-100 erhältlich. Es handelt sich um einen mattweißen/gelblichen Feststoff mit einem Schmelzpunkt von 110°C, einem Phosphorgehalt von 13,4 % und einem Stickstoffgehalt von 6,0 %. Der Anteil an drei Phenoxyphosphazen-Einheiten aufweisenden Ringen beträgt mindestens 80 Gew.-%.

### Komponente C

Als Komponente C werden 1 bis 15 Gew.-%, vorzugsweise 3 bis 9 Gew.-%, insbesondere 5 bis 7 Gew.-%, speziell etwa 6,5 Gew.-% roter Phosphor eingesetzt. Für eine Beschreibung des roten Phosphors kann auf Holleman Wiberg, Lehrbuch der anorganischen Chemie, 1985, Seite 624, Abschnitt 2.1.3.4, verwiesen werden. Der rote Phosphor kann in Pulverform oder in Form eines Masterbatches, vorzugsweise in Polyamid, den erfindungsgemäßen Formmassen zugesetzt werden. Der rote Phosphor weist eine Dichte von etwa 2,2 g/cm³ auf.

### Komponente D

Als Komponente D werden 0,1 bis 20 Gew.-%., vorzugsweise 1 bis 10 Gew.-%, insbesondere 3 bis 8 Gew.-%, beispielsweise etwa 6 Gew.-%, mindestens eines Schlagzäh-modifizierenden Polymers eingesetzt. Es handelt sich dabei um Schlagzähmodifizierende Polymere, mit denen die Polyamide der Komponente A typischerweise schlagzäh ausgerüstet werden. Vorzugsweise handelt es sich um ein Elastomer, beispielsweise um natürliche oder synthetische Kautschuke oder andere Elastomere.

Als einsetzbare synthetische Kautschuke können Ethylen-Propylen-Dien-Kautschuk (EPDM), Styren-Butadien-Kautschuk (SBR), Butadien-Kautschuk (BR), NitrilKautschuk (NBR), Hydrin-Kautschuk (ECO), Acrylat-Kautschuke (ASA) genannt werden. Auch Silikon-Kautschuke, Polyoxyalkylen-Kautschuke und andere Kautschuke sind einsetzbar.

Als thermoplastische Elastomere können thermoplastisches Polyurethan (TPU), StyrolButadien-Styrol-Blockcopolymere (SBS), Styrol-Isopren-Styrol-Blockcopolymere (SIS), Styrol-Ethylen-Butylen-Styrol-Blockcopolymere (SEBS) oder Styrol-Ethylen-Propylen-Styrol-Blockcopolymere (SEPS) benannt werden.

Ferner können Harze als Blendpolymere eingesetzt werden, etwa Urethanharze, Acrylharze, Fluorharze, Silikonharze, Imidharze, Amidimidharze, Epoxyharze, Ureaharze, Alkydharze oder Melaminharz.

Als Blendpolymer kommen ferner Ethylencopolymerisate in Betracht, beispielsweise Copolymere aus Ethylen und 1-Octen, 1-Buten oder Propylen, wie sie in der WO 2008/074687 beschrieben sind. Die Molekulargewichte derartiger Ethylen-α-Olefin-Copolymere liegt vorzugsweise im Bereich von 10.000 bis 500.000 g/mol, bevorzugt zwischen 15.000 und 400.000 g/mol (Zahlenmittel des Molekulargewichts). Es können auch reine Polyolefine wie Polyethylen oder Polypropylen eingesetzt werden.

Für geeignete Polyurethane kann auf EP-B-1 984 438, DE-A-10 2006 045 869 und EP-A-2 223 904 verwiesen werden.

Weitere geeignete thermoplastische Harze sind in der JP-A-2009-155436 in Absatz [0028] aufgeführt.

Weitere als Komponente D geeignete Polymere sind in der EP-A-2 100 919 in Abschnitt [0044] genannt.

Als Komponente D werden Copolymerisate von Ethylen und Acrylaten, Acylsäure und/oder Maleinsäureanhydrid eingesetzt. Besonders bevorzugt werden Copolymere aus Ethylen, n-Butylacrylat, Acrylsäure und Maleinsäureanhydrid eingesetzt. Ein entsprechendes Copolymer ist unter der Bezeichnung Lupolen^{®} KR1270 von der BASF SE erhältlich.

### Komponente E

Als Komponente E enthalten die thermoplastischen Formmassen 0 bis 50 Gew.-%, bei Vorliegen 1 bis 50 Gew.-%, vorzugsweise 10 bis 35 Gew.-%, insbesondere 20 bis 30 Gew.-%, beispielsweise etwa 25 Gew.-% Glasfasern. Dabei können beliebige geeignete Glasfasern als Schnittglas oder in Form von Rovings eingesetzt werden. Vorzugsweise weisen die Schnittglasfasern einen Durchmesser von etwa 10 µm auf. Die Glasfasern können oberflächenbehandelt sein, beispielsweise silanisiert.

### Komponente F

Als Komponente F können die erfindungsgemäßen thermoplastischen Formmassen 0 bis 30 Gew.-% weitere Zusatzstoffe enthalten. Bei diesen Zusatzstoffen kann es sich um Stabilisatoren, Gleit- und Entformungsmittel handeln. Für eine nähere Beschreibung möglicher Zusatzstoffe kann auf die WO 2008/074687, Seiten 31 bis 37, verwiesen werden.

Vorzugsweise liegen 0,1 bis 20 Gew.-% der Komponente F vor, wobei Komponente F Stabilisatoren und Schmiermittel enthält. Beispielsweise kann Zinkoxid als Stabilisator eingesetzt werden, und Calziumstearat kann als Schmiermittel eingesetzt werden. Übliche Antioxidantien für Polyamid-Formmassen können eingesetzt werden, beispielsweise die unter der Marke Irganox^{®} vertriebenen Antioxidantien.

Gemäß einer Ausführungsform der Erfindung werden neben den Komponenten B und C keine weiteren Flammschutzmittel eingesetzt.

Die Herstellung der erfindungsgemäßen Formmassen erfolgt durch Vermischen der Komponenten A bis F. Zweckmäßigerweise verwendet man hierzu Extruder, beispielsweise Einschnecken- oder Zweischnecken-Extruder, oder andere herkömmliche Plastifizierungsvorrichtungen wie Brabender-Mühlen oder Banbury-Mühlen.

Die Reihenfolge der Vermischung der einzelnen Komponenten kann dabei frei gewählt werden. Vorzugsweise wird Komponente C als polyamidhaltiger Masterbatch eingesetzt.

Die erfindungsgemäßen Formmassen zeichnen sich durch eine signifikante Reduzierung der Brennzeiten bei Probendicken von 0,4 mm und 0,8 mm aus. Sie eignen sich zur Herstellung von Formkörpern, Fasern oder Folien.

Die Erfindung betrifft auch entsprechende Formkörper, Fasern oder Folien aus der vorstehend beschriebenen thermoplastischen Formmasse.

Die Erfindung wird durch die nachstehenden Beispiele näher erläutert.

### Beispiele

Die folgenden Komponenten wurden in den erfindungsgemäßen Zusammensetzungen eingesetzt:
- Komponente A:: Polyamid-66 (Ultramid^{®}A24 der BASF SE)
- Komponente B:: Cyclophosphazen (Rabitle^{®} FB 110 von Fushimi Co.)
- Komponente C:: 40 % roter Phosphor in Polyamid-66-Batch (Masteret-21440 von Italmatch)
- Komponente D:: Ethylen/n-Butylacrylat/Acrylsäure/Maleinsäureanhydrid-Copolymer (Lupolen^{®} KR 1270 von BASF SE)
- Komponente E:: Glasfasern (OCF 1110 mit einem mittleren Durchmesser von 10 µm)
- Komponente F:: Stabilisator/Schmiermittel: 50 % Zinkoxid, 25 % Calciumstearat, 25 % Antioxidant Irganox^{®} 98
- Schmiermittel:: 50 % Stearylstearat, 25 % Zinkstearat, 25 % Calciumstearat

Die Zusammensetzungen der Vergleichsformmasse V1, die kein Cyclophosphazen enthält, und der erfindungsgemäßen Formmassen der Beispiele 2, 3 und 4 sind in der nachfolgenden Tabelle 1 zusammengefasst.

**Tabelle 1**

| **Beispiel** | **V1 [%]** | **2 [%]** | **3 [%]** | **4 [%]** |
|---|---|---|---|---|
| **Ultramid A24E** | 50,21 | 47,71 | 45,21 | 42,71 |
| **GF OCF 1110** | 26,00 | 26,00 | 26,00 | 26,00 |
| **Masteret**-**21440**, **Italmatch** | 16,25 | 16,25 | 16,25 | 16,25 |
| **Lupolen KR 1270** | 6,00 | 6,00 | 6,00 | 6,00 |
| **Ultrabatch 190X, Great Lakes** | 1,40 | 1,40 | 1,40 | 1,40 |
| **Ultrabatch 170** | 0,14 | 0,14 | 0,14 | 0,14 |
| **Cyclophosphazen FP**-**110** | | 2,50 | 5,00 | 7,50 |

Die Compoundierung erfolgte auf einem Extruder ZSK25 F41 bei einer Schneckengeschwindigkeit von 370 min⁻¹, einem Durchsatz von 28 kg/h, unter Anlegen eines Drucks von 200 mbar abs. Der Extruder wurde bei einer Temperatur von 280°C betrieben.

Probekörper für Brennversuche nach UL-94 wurden wie in EP-A-2 100 919 beschrieben, hergestellt. Es wurden Formkörper mit einer Dicke von 0,4 mm und 0,8 mm hergestellt.

Die mechanischen Eigenschaften der Formkörper wurden nach folgenden Standards bestimmt:
Zug-E-Modul geprüft nach DIN EN ISO 527-1/-2
Bruchspannung geprüft mit 5 mm/min nach DIN EN ISO 527-1/-2
Bruchdehnung geprüft mit 5 mm/min nach DIN EN ISO 527-1/-2
Charpy Schlagzähigkeit geprüft bei 23°C nach DIN EN ISO 179

Die Ergebnisse der mechanischen Untersuchungen und der Brennversuche sind in der nachstehenden Tabelle 2 zusammengefasst. Dabei wurden an den beiden unterschiedlichen Dicken 0,4 mm und 0,8 mm Brandversuche bei 2d, 23°C und 7d 70°C durchgeführt. Die Ergebnisse sind in der nachstehenden Tabelle 2 zusammengefasst.

**Tabelle 2**

| | | | | |
|---|---|---|---|---|
| **Fülldruck UL94 0,4mm [bar]** | 807,5 | 807,5 | 779,3 | 656,2 |
| **E-Modul [MPa]** | 8453 | 8218 | 8003 | / |
| **Bruchspannung (ó_B) [MPa]** | 134,9 | 127,0 | 123,2 | / |
| **Bruchdehnung (ε_B) [MPa]** | 3,2 | 3,3 | 3,0 | / |
| **Charpy ung. 23°C [kJ/m²]** | 67 | 64,4 | 63,3 | / |
| | | | | |
| **UL94 0,4 mm (2d, 23°C)** | V1 | 2 | 3 | 4 |
| **Abtropfen ohne Entzündung** | | | | |
| **Gesamtnachbrenndauer** | 24,1 | 19,4 | 16,8 | 12,2 |
| **Entzündung Bodenwatte** | 3 | 6 | 4 | 4 |
| **Nachbrenndauer > 30sek.** | 0 | 0 | 0 | 0 |
| **UL 94-Einstufung** | V2 | V2 | V2 | V2 |
| | | | | |
| **UL94 0,4 mm (7d, 70°C)** | V1 | 2 | 3 | 4 |
| **Abtropfen ohne Entzündung** | 5 | 7 | 10 | 3 |
| **Gesamtnachbrenndauer** | 16,0 | 15,2 | 12,4 | 9,5 |
| **Entzündung Bodenwatte** | V1 | 0 | 0 | 0 |
| **Nachbrenndauer > 30sek.** | 0 | 0 | 0 | 0 |
| **UL 94-Einstufung** | V2 | V0 | V0 | V0 |
| Fülldruck UL94 0,8 mm [bar] | 713,8 | 677,7 | 452,9 | 405,5 |
| | | | | |
| **UL94 0,8 mm (2d, 23°C)** | V1 | 2 | 3 | 4 |
| **Abtropfen ohne Entzündung** | 5 | 7 | 10 | 1 |
| **Gesamtnachbrenndauer** | 30,9 | 26,3 | 18,6 | 14,6 |
| **Entzündung Bodenwatte** | 0 | 0 | 0 | 0 |
| **Nachbrenndauer > 30sek.** | 0 | 0 | 0 | 0 |
| **UL94-Einstufung** | V0 | V0 | V0 | V0 |
| | | | | |
| **UL94 0,8mm (7d, 70°C)** | 1 | 2 | 3 | 4 |
| **Abtropfen ohne Entzündung** | 2 | 3 | 0 | 0 |
| **Gesamtnachbrenndauer** | 65,3 | 17,0 | 13,0 | 19,7 |
| **Entzündung Bodenwatte** | 0 | 0 | 0 | 0 |
| **Nachbrenndauer > 30sek.** | 0 | 0 | 0 | 0 |
| **UL 94-Einstufung** | V0 | V0 | V0 | V0 |

Wie aus den Ergebnissen zur Gesamtnachbrenndauer hervorgeht, kann durch die Kombination von cyclischen Phenoxyphosphazenen mit rotem Phosphor die Gesamtnachbrenndauer signifikant vermindert werden.

## Patentansprüche

1. Thermoplastische Formmasse, bestehend aus
a) 30 bis 95 Gew.-% mindestens eines aliphatischen Polyamids oder Co-polyamids als Komponente A,
b) 1 bis 30 Gew.-% mindestens eines cyclischen Phenoxyphosphazens mit mindestens 3 Phenoxyphosphazen-Einheiten als Komponente B,
c) 1 bis 15 Gew.-% roten Phosphor als Komponente C,
d) 0,1 bis 20 Gew.-% mindestens eines Schlagzäh-modifizierenden Polymers als Komponente D, wobei Copolymerisate von Ethylen mit Acrylaten, Acrylsäure und/oder Maleinsäureanhydrid eingesetzt werden,
e) 0 bis 50 Gew.-% Glasfasern als Komponente E,
f) 0 bis 30 Gew.-% weitere Zusatzstoffe als Komponente F, wobei die Komponente F ein Stabilisator und/oder Gleit- und Entformungsmittel ist,
wobei die Gesamtmenge der Komponenten A bis F 100 Gew.-% ergibt.

2. Thermoplastische Formmasse nach Anspruch 1, **dadurch gekennzeichnet, dass** Komponente A Polyamid-6, Polyamid-66 oder ein Copolyamid oder Blend davon ist.

3. Thermoplastische Formmasse nach Anspruch 1 oder 2, **dadurch gekennzeichnet, dass** Komponente B ein Gemisch aus cyclischen Phenoxyphosphazenen mit 3 und 4 Phenoxyphosphazen-Einheiten ist.

4. Thermoplastische Formmasse nach einem der Ansprüche 1 bis 3, **dadurch gekennzeichnet, dass** als Komponente E 5 bis 50 Gew.-% Glasfasern vorliegen.

5. Thermoplastische Formmasse nach einem der Ansprüche 1 bis 4, **dadurch gekennzeichnet, dass** 0,1 bis 20 Gew.-% der Komponente F vorliegen, die Stabilisatoren und Schmiermittel enthält.

6. Verfahren zur Herstellung von thermoplastischen Formmassen nach einem der Ansprüche 1 bis 5 durch Vermischen der Komponenten A bis F.

7. Verfahren nach Anspruch 6, **dadurch gekennzeichnet, dass** Komponente C als polyamidhaltiger Masterbatch eingesetzt wird.

8. Verwendung einer thermoplastischen Formmasse nach einem der Ansprüche 1 bis 5 zur Herstellung von Formkörpern, Fasern oder Folien.

9. Formkörper, Fasern oder Folien aus einer thermoplastischen Formmasse nach einem der Ansprüche 1 bis 5.

## Claims

1. A thermoplastic molding composition composed of
a) from 30 to 95% by weight of at least one aliphatic polyamide or copolyamide, as component A,
b) from 1 to 30% by weight of at least one cyclic phenoxyphosphazene having at least 3 phenoxyphosphazene units, as component B,
c) from 1 to 15% by weight of red phosphorus, as component C,
d) from 0.1 to 20% by weight of at least one impact-modifying polymer, as component D, wherein copolymers of ethylene with acrylates, acrylic acid, and/or maleic anhydride are used,
e) from 0 to 50% by weight of glass fibers, as component E, and
f) from 0 to 30% by weight of further additives, as component F, where component F is a stabilizer and/or lubricant and mold-release agent,
where the total amount of components A to F gives 100% by weight.

2. The thermoplastic molding composition according to claim 1, wherein component A is nylon-6, nylon-6,6, or a copolyamide or blend thereof.

3. The thermoplastic molding composition according to claim 1 or 2, wherein component B is a mixture made of cyclic phenoxyphosphazenes having 3 and 4 phenoxyphosphazene units.

4. The thermoplastic molding composition according to any of claims 1 to 3, wherein from 5 to 50% by weight of glass fibers are present, as component E.

5. The thermoplastic molding composition according to any of claims 1 to 4, wherein from 0.1 to 20% by weight of component F are present, where component F comprises stabilizers and lubricants.

6. A process for producing thermoplastic molding compositions according to any of claims 1 to 5 via mixing of components A to F.

7. The process according to claim 6, wherein component C is used in the form of polyamide-containing masterbatch.

8. The use of a thermoplastic molding composition according to any of claims 1 to 5 for producing moldings, fibers, or foils.

9. A molding, fiber, or foil made of a thermoplastic molding composition according to any of claims 1 to 5.

## Revendications

1. Matériau de moulage thermoplastique, constitué par :
a) 30 à 95 % en poids d'au moins un polyamide ou copolyamide aliphatique en tant que composant A,
b) 1 à 30 % en poids d'au moins un phénoxyphosphazène cyclique contenant au moins 3 unités phénoxyphosphazène en tant que composant B,
c) 1 à 15 % en poids de phosphore rouge en tant que composant C,
d) 0,1 à 20 % en poids d'au moins un polymère modifiant la résistance aux impacts en tant que composant D, des copolymères d'éthylène avec des acrylates, de l'acide acrylique et/ou de l'anhydride de l'acide maléique étant utilisés,
e) 0 à 50 % en poids de fibres de verre en tant que composant E,
f) 0 à 30 % en poids d'additifs supplémentaires en tant que composant F, le composant F étant un stabilisateur et/ou un agent lubrifiant et démoulant,
la quantité totale des composants A à F étant de 100 % en poids.

2. Matériau de moulage thermoplastique selon la revendication 1, **caractérisé en ce que** le composant A est le polyamide 6, le polyamide 66 ou un copolyamide ou mélange de ceux-ci.

3. Matériau de moulage thermoplastique selon la revendication 1 ou 2, **caractérisé en ce que** le composant B est un mélange de phénoxyphosphazènes cycliques contenant 3 et 4 unités phénoxyphosphazène.

4. Matériau de moulage thermoplastique selon l'une quelconque des revendications 1 à 3, **caractérisé en ce que** 5 à 50 % en poids de fibres de verre sont présentes en tant que composant E.

5. Matériau de moulage thermoplastique selon l'une quelconque des revendications 1 à 4, **caractérisé en ce que** 0,1 à 20 % en poids du composant F sont présents, qui contient des stabilisateurs et des lubrifiants.

6. Procédé de fabrication de matériaux de moulage thermoplastique selon l'une quelconque des revendications 1 à 5 par mélange des composants A à F.

7. Procédé selon la revendication 6, **caractérisé en ce que** le composant C est utilisé sous la forme d'un mélange maître contenant du polyamide.

8. Utilisation d'un matériau de moulage thermoplastique selon l'une quelconque des revendications 1 à 5 pour la fabrication de corps moulés, de fibres ou de films.

9. Corps moulés, fibres ou films en un matériau de moulage thermoplastique selon l'une quelconque des revendications 1 à 5.
